Europäisches Patentamt

European Patent Office

Office européen des brevets

(19)

(11) Publication number : **0 637 017 A1**

## (12) EUROPEAN PATENT APPLICATION

(21) Application number : 94305600.2

(22) Date of filing : 28.07.94

(51) Int. Cl.$^6$ : **G11B 7/00,** G11B 7/24, G11B 7/26, G11B 11/10, G11B 13/04

(30) Priority : 30.07.93 JP 190410/93

(43) Date of publication of application :
01.02.95 Bulletin 95/05

(84) Designated Contracting States :
**DE FR GB IT NL**

(71) Applicant : **CANON KABUSHIKI KAISHA**
**30-2, 3-chome, Shimomaruko,**
**Ohta-ku**
**Tokyo (JP)**

(72) Inventor : **Saito, Ichiro**
**c/o Canon K.K.,**
**3-2, 3-chome Shimomaruko**
**Ohta-ku, Tokyo (JP)**

Inventor : **Yoshida, Hiroshi**
**c/o Canon K.K.,**
**3-2, 3-chome Shimomaruko**
**Ohta-ku, Tokyo (JP)**
Inventor : **Honguu, Kazuoki**
**c/o Canon K.K.,**
**3-2, 3-chome Shimomaruko**
**Ohta-ku, Tokyo (JP)**
Inventor : **Saito, Yoshihisa**
**c/o Canon K.K.,**
**3-2, 3-chome Shimomaruko**
**Ohta-ku, Tokyo (JP)**
Inventor : **Kojima, Yasuo**
**c/o Canon K.K.,**
**3-2, 3-chome Shimomaruko**
**Ohta-ku, Tokyo (JP)**

(74) Representative : **Beresford, Keith Denis Lewis**
**et al**
**BERESFORD & Co.**
**2-5 Warwick Court**
**High Holborn**
**London WC1R 5DJ (GB)**

(54) Optical recording medium having recording and dielectric layers.

(57) An optical recording medium having at least a first dielectric layer, a recording layer and a second dielectric layer successively formed on a transparent substrate, the first dielectric layer comprising a material satisfying the general formula :
$$Mx'Ry' ;$$
where M is a metallic or semimetallic element, R is a light element which is one of nitride, carbon, oxygen and sulfur, and x' and y' are each a chemical composition value of the corresponding element, and the value of y'/x' varies so as to be maximized in the vicinity of the substrate in the direction of film thickness.

FIG. 1

EP 0 637 017 A1

## BACKGROUND OF THE INVENTION

### Field of the Invention

The present invention relates to an optical recording medium for recording and reproducing information at a high density using a light beam.

### Description of the Related Art

Optical recording mediums are capable of high-density recording in a non-contact and random-access manner and may find promising use as a large-capacity digital memory.

An optical recording medium of this kind has a structure in which a recording layer is formed directly on a substrate or on a dielectric layer previously formed on the substrate.

The substrate is formed of polycarbonate (PC), polymethyl methacrylate (PMMA), epoxy resin, amorphous polyorefine, or glass or glass/2P. Alternatively, grooves of glass/2P substrate may be formed in a glass substrate surface by a 2-P (photo-polymer) method.

As the recording layer, an amorphous magnetic thin film formed of a rare earth-transition metal, a chalcogen compound thin film formed by utilizing phase change of an amorphous phase and a crystal phase, or a heat-mode recording film is used.

In an optical recording medium having the above-described structure, various undesirable effects may result with respect to the interface between the substrate and the dielectric layer based on the use of a certain material, such as a resin, for the substrate.

For example, if the optical recording medium is constituted of a substrate made of an organic material, an intermediate layer formed of an inorganic dielectric material, or the like, and a recording layer, then a reduction in the adherence between the bonding surfaces of these materials or separation of these surfaces can easily be caused in a temperature and/or humidity cycling condition, since organic materials and inorganic materials in general differ greatly from each other in physical properties (e.g., heat conductivity and thermal expansion coefficient). This may be because a stress is caused in the bonding surfaces during cycles of expansion and contraction of the substrate and the dielectric layer. From a portion of the recording medium deteriorated for the above-described reason, a chemical change, such as oxidation or corrosion of the recording layer, or hydrolysis of the substrate, may occur, resulting in failure to record or reproduce a signal. Particularly under a high-humidity high-temperature condition, such a phenomenon can occur easily, and the long-time reliability of the medium is not satisfactorily high.

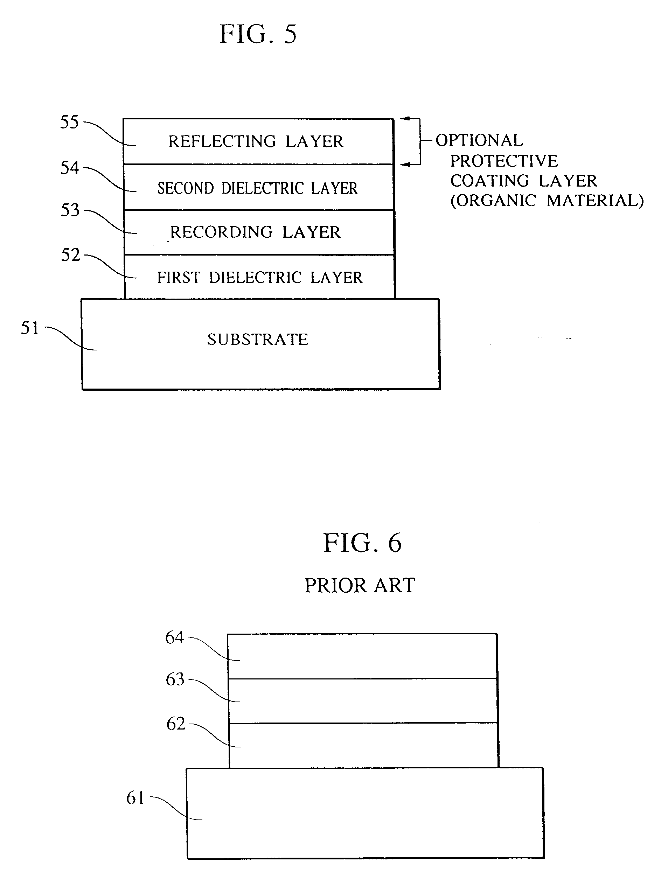

To solve this problem, the following method may be used. As shown in Fig. 6, in an optical recording medium in which a first dielectric layer 62, a recording layer 63 and a second dielectric layer 64 are successively laminated on a substrate 61 made of a transparent resin, if the first dielectric layer 62 is formed of Mx'Ry' (where M is a metallic or semimetallic element, R is a light element, such as nitride, carbon, oxygen or sulfur, and x' and y' are each a chemical composition value of the corresponding element), then y'/x of the first dielectric layer 62 is increased, that is, the ratio of light elements to the metallic or semimetallic element is increased relative to the value in accordance with the stoichiometric composition to improve the adherence between the substrate and the first dielectric layer 62.

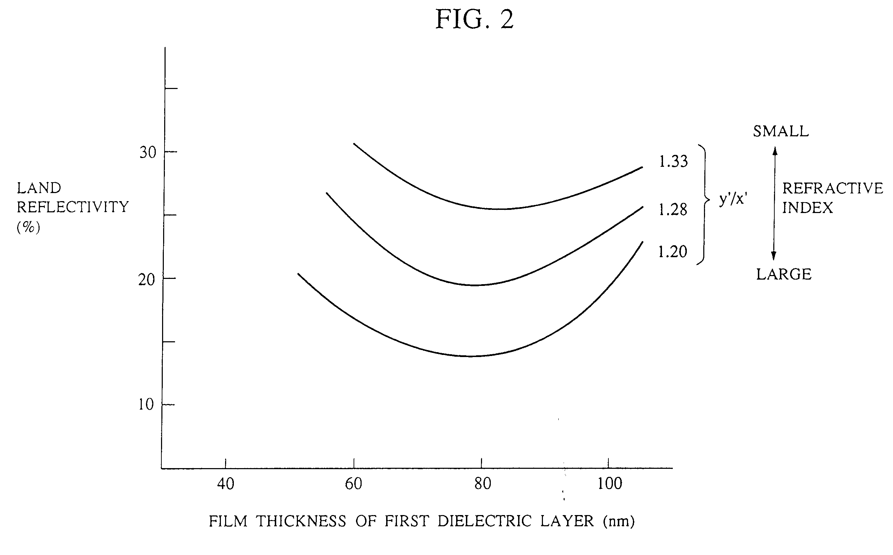

However, in the case of a recording medium in which a first dielectric layer 62 formed of an SiNx thin film and a recording layer 63 formed of a 100 nm thick TbFeCo thin film are formed on a PC (polycarbonate) substrate 61, the reflectivity for reading from the substrate side changes with respect to the film thickness of the first dielectric layer 62 and the composition ratio y'/x' (or the refractive index), as shown in Fig. 2. That is, if y'/x' is large (if the refractive index is small), then the reflectivity does not change largely with respect to the change in the film thickness. This effect is advantageous but also creates a difficulty in adjusting the reflectivity to a desired value by changing the film thickness. In particular, if y'/x' is excessively high, then the reflectivity is so high that the recording density and the C/N ratio are seriously reduced, while the desired reflectivity, which depends upon the combination of a substrate and a drive, is, ordinarily, about 20 %.

## SUMMARY OF THE INVENTION

In view of the above-described drawbacks, an object of the present invention is to provide an optical recording medium having improved adherence between a substrate and a dielectric layer even under a high-humidity and high-temperature condition, and having improved long-term reliability with respect to signal recording and reproduction.

To achieve this object, according to the present invention there is provided an optical recording medium formed by successively laminating a first dielectric layer, a recording layer and a second dielectric layer on a transparent substrate. The first dielectric layer is constituted of a material expressed by the following general formula:

$$Mx'Ry'$$

where M is a metallic or semimetallic element, R is a light element which is one of nitride, carbon, oxygen and sulfur, and $x'$ and $y'$ are each a chemical composition value of the corresponding element. The value of $y'/x'$ is varied so as to be maximized in the vicinity of the substrate in the direction of film thickness.

## BRIEF DESCRIPTION OF THE DRAWINGS

Fig. 1 is a diagram showing the structure of an embodiment of an optical recording medium in accordance with the present invention;

Fig. 2 is a graph showing the relationship between the reflectivity of the recording medium, the thickness of a dielectric layer and the composition of a dielectric;

Fig. 3 is a graph showing an example of a variation in the composition of a first dielectric layer;

Fig. 4 is a graph showing another example of a variation in the composition of the first dielectric layer;

Fig. 5 is a diagram showing another embodiment of the optical recording medium in accordance with the present invention; and

Fig. 6 is a diagram of the structure of a conventional optical recording medium.

## DESCRIPTION OF THE PREFERRED EMBODIMENTS

Preferred embodiments of the present invention will be described in detail with reference to the drawings.

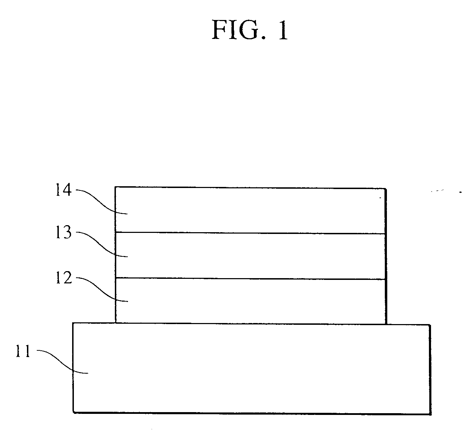

Fig. 1 shows a first embodiment of an optical recording medium in accordance with the present invention. In this embodiment, the optical recording medium of the present invention is formed by successively forming a first dielectric layer 12, a recording layer 13 and a second dielectric layer 14 on a substrate 11 having a resinous surface layer of an organic material.

The substrate 11 may be any well-known transparent substrate made of materials such as those described above with respect to the conventional art.

The first dielectric layer 12 is formed mainly for protection of the recording layer 13 formed thereon, i.e., for prevention of oxidation, corrosion and the like of the recording layer and also for the purpose of adjusting or improving the reflectivity, the recording sensitivity and the C/N ratio of the recording medium. The dielectric layer 12 is formed in a single-layer or multiple layer structure.

The material forming the first dielectric layer 12 is a compound represented by a general formula (I):

$$Mx'Ry' \quad (I)$$

as in the case of the above-described method.

In this formula, M is a metal, such as Al, Zr, Ti, Mg, W or Zn, or a semimetal, such as Si or B, R is a light element, such as nitride, carbon, oxygen or sulfur, and $x'$ and $y'$ are each a chemical composition value of the corresponding element.

The first dielectric layer 12 is formed so that the value of $y'/x'$ of the material is maximized in the vicinity of the substrate in the direction of film thickness.

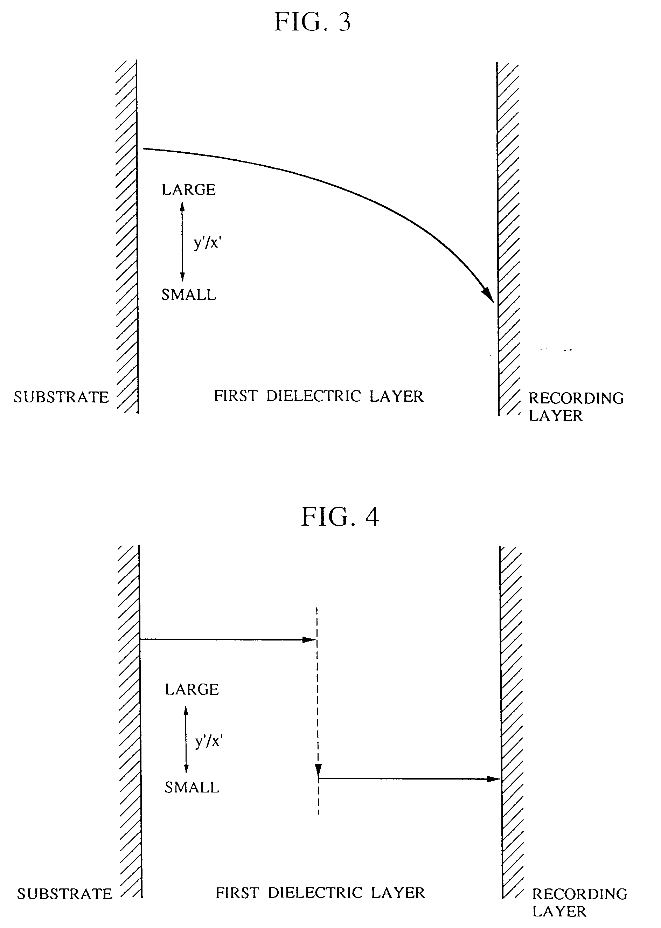

To maximize the value of $y'/x'$ in the vicinity of the substrate, $y'/x'$ may be varied continuously, for example, in accordance with a pattern shown in Fig. 3, i.e., so as to be reduced continuously in the direction from the substrate 11 to the recording layer 13, or may be varied discontinuously, for example, in accordance with a pattern shown in Fig. 4.

If the corresponding material in accordance with the stoichiometric composition ratio is expressed by the following general formula (II):

$$MxRy \quad (II)$$

(where M and R are the same as those in the above, and x and y are stoichiometric composition values), then it is necessary that $y'/x'$ of the first dielectric layer 12 satisfies $0.7y/x \leq y'/x' < 1.8y/x$ and, more preferably, $0.8y/x \leq y'/x' < 1.5y/x$. If the value of $y'/x'$ is smaller than $0.7y/x$, then the light absorption of the thin film is considerably large. If $y'/x'$ is larger than $1.8y/x$, then a contamination of the recording surface with $Mx'Ry'$ is considerably increased. As the value of $y'/x'$ in the vicinity of the substrate, $0.9y/x \leq y'/x' < 1.8y/x$ is selected. If the value of $y'/x'$ in the vicinity of the substrate is smaller than the stoichiometric composition ratio $y/x$, then the adherence to the substrate is very weak.

The refractive index of this layer is not particularly limited since it varies depending upon the material used. However, the refractive index is ordinarily set to about 1.7 to 2.5. Specifically, it is set to about 1.7 to 2.2 in the vicinity of the substrate 11.

Examples of the chemical compound in accordance with MxRy of the general formula (II) are oxides, such as SiO, $SiO_2$, $Al_2O_3$, $ZrO_2$, $TiO_2$ and MgO, nitrides, such as $Si_3N_4$, AlN, ZrN, TiN and BN, carbides, such as SiC, ZrC, WC and $B_4C$, and sulfides, such as ZnS and the like.

The first dielectric layer 12 may be a composite material composed of a plurality of chemical compounds. For the calculation of y'/x' in such a case, the sum of values obtained by multiplying the values y'/x' of the plurality of compounds by respective molar fractions of the compounds may be used.

The film thickness of the first dielectric layer 12 is preferably about 20 to 300 nm. If the film thickness is smaller than 20 nm, then the effect of the protective function is not sufficiently high. If the film thickness is larger than 300 nm, then a considerably large variation occurs in the optical characteristics, i.e., the reflectivity and other factors with respect to the change in the film thickness. Most preferably, the film thickness is about 60 to 150 nm.

The first dielectric layer 12 is formed, typically, by a method of using a sputtering or vacuum deposition process and changing the flow rate and the molar partial pressure ratio of a gas used in this process, or changing a substrate bias applied.

As described above, the optical characteristics, i.e., the reflectivity and other factors, can be set to desired values by increasing the value of y'/x' of the first dielectric layer 12 (by reducing the refractive index) in the vicinity of the substrate 11 so that the adherence between the first dielectric layer 12 and the substrate is improved, or by reducing the value of y'/x' (by increasing the refractive index) at a position more remote from the substrate 11. That is, the first dielectric layer 12 can have a function of improving the adherence and a function of adjusting optical characteristics if the value of y'/x' is changed in the direction of thickness of the first dielectric layer.

The recording layer 13 is, for example, a thin film of a rare earth-transition metal amorphous magnetic material formed from a rare earth metal, such as Gd, Tb or Dy, and a transition metal, such as Fe or Co, by sputtering or vacuum deposition. Ordinarily, a single or multilayer film of TbFeCo, DyFeCo, GdTbFeCo, TbDyFeCo, GdFeCo or the like is used as this kind of magnetic thin film. The thickness of such a magnetic thin film is ordinarily set to about 10 to 1,000 nm.

Further, the recording layer 13 may be a chalcogen compound thin film which phase changes between amorphous and crystalline phases. Ordinarily, Te-Se, Te-Se-Sn, Te-Ge-Sb, In-Se-Te, Te-Pb-Se, $TeO_x$ or the like is used. Such a recording layer film is formed by sputtering, vacuum deposition, ion plating or the like. The film thickness is set to about 200 to 1,000 nm. These recording layer materials are well known.

The second dielectric layer 14 is formed by using the same material and the same film forming method as those for the first dielectric layer 12. The film thickness of this layer is ordinarily set to 20 to 500 nm.

The optical recording medium structure of the present invention is not limited to that illustrated in Fig. 1. For example, a structure, such as that shown in Fig. 5, may be used in which a recording layer 53 in formed as a thin film and a reflecting layer 55 is formed on a second dielectric layer 54. These layers are formed on a substrate 51 and a first dielectric layer 52. A protective coating layer formed of an organic material may be formed on the second dielectric layer 54 or the reflecting layer 55. The structure of the optical recording medium may be of an adherence type, such that the protective substrate is attached through a bonding layer, or of an air sandwich type such that the protective substrate is attached through a spacer and a bonding layer.

The present invention will be described with respect to experimental examples thereof.

[Experimental Example 1]

An optical recording medium having the structure shown in Fig. 1 was manufactured by a process described below. A first dielectric layer 12 formed of silicon nitride $SiN_x$ was formed on a disk-like polycarbonate substrate 11. The first dielectric layer 12 was formed by reactive sputtering process in which a Si target was used and (Ar + $N_2$) gas introduced. First, for film formation in the vicinity of the substrate 11, Ar gas and $N_2$ gas were caused to flow at 145 sccm and 95 sccm, respectively. A thin film having y'/x' = 1.35 and a thickness of 40 nm was formed under this condition. Thereafter, the Ar gas flow rate and the $N_2$ gas flow rate were changed to 200 sccm and 75 sccm, respectively, and a thin film having y'/x' = 1.20 and a thickness of 55 nm was formed. The first dielectric layer 12 was thereby formed, in which y'/x' discontinuously varied in the direction of film thickness. Next, as a recording layer 13, a TbFeCo film having a thickness of 80 nm was formed by sputtering. Successively, as a second dielectric layer an $SiN_x$ film was formed by the above-mentioned reactive sputtering process so as to have a thickness of 70 nm and y'/x' = 1.20. In this manner, an optical recording medium in accordance with the present invention was manufactured.

A comparative experimental example 1 was manufactured in accordance with the same structure and the same method as those of experimental example 1, except that the first dielectric layer 12 had y'/x' = 1.20 through its thickness and had a thickness of 90 nm. Also, a comparative experimental example 2 was manufactured in accordance with the same structure and the same method as those of the experimental example 1, except that the first dielectric layer 12 had y'/x' = 1.35 through its thickness and had a thickness of 90 nm.

These recording mediums (experimental example 1 and comparative experimental examples 1 and 2) were subjected to an acceleration test under conditions of a temperature of 70°C and a relative humidity of 90 % and characteristics of them were evaluated. Table 1 shows results of the test and evaluation. A medium evaluation apparatus (OMS-2000, a product from Nakamichi (Kabushiki Kaisha)) was used for measurement under the following conditions:

a linear velocity of 6m/sec, a frequency of 2 MHz, a bias magnetic field of 300 Oe, recording power of 9 mW, and a reproducing power of 1.4 mW.

(1) Bit error rate (BER) change (acceleration test)

As shown in Table 1, in the case of the medium of experimental example 1, substantially no change was caused in the bit error rate (BER) over 1,000 hours in an environment where the temperature was 70°C and the relative humidity of 90 %RH. Also, substantially no change was observed in the external appearance by microscopic observation. On the other hand, in the case of the medium of comparative experimental example 1, the BER increased as time elapsed, and a defect considered to be an abnormality in the film or the substrate was observed at the BER increased portion. In the case of comparative experimental example 2, substantially no changes were observed in the BER and the external appearance during the endurance test, as in the case of experimental example 1, but the reflectivity increased and the print characteristics could not be adjusted to suitable values. From these results, it can be understood that the change with respect to time under a high-humidity high-temperature condition is smaller if y'/x' is closer to the stoichiometric composition y/x, that is, the effect of increasing y'/x' in the vicinity of the substrate in accordance with the present invention can be recognized.

(2) Adjustment of characteristics

A comparison was made from a view point of adjusting characteristics (reflectivity, magneto-optical (MO) signal amplitude). The results of this comparison are shown in Table 1. In the case of the medium of experimental example 1, the characteristics could be adjusted by changing y'/x' and the film thickness in the direction of film thickness. In contrast, in the case of the medium of comparative experimental example 2, the reflectivity is disadvantageously high and the MO amplitude is small since y'/x' is so large (the refractive index was so small) that the interference effect is not sufficiently high.

As can be understood from these results, the medium of experimental example 1 of the invention has improved reliability for long-time use without impairing its characteristics.

[Experimental Examples 2 to 4]

Mediums having the layer structures shown in Table 1 (experimental examples 2 to 4) were manufactured and subjected to the same acceleration test as in experimental example 1, and the characteristics were evaluated in the same manner. Each of the mediums of experimental examples 2 to 4 is satisfactory in terms of the results of the acceleration test and the characteristic evaluation.

[Comparative Experimental Examples 3 and 4]

A recording medium of a comparative experimental example 3 was manufactured which was formed in the same manner as experimental example 3 except that y'/x' of the first dielectric layer 12 was constant in the direction of film thickness, that is, y'/x' = 1.13, and that the film thickness was 90 nm. A recording medium of a comparative experimental example 4 was also manufactured which was formed in the same manner as experimental example 3 except that y'/x' was constant in the direction of film thickness, that is, y'/x' = 1.50, and that the film thickness was 90 nm. These mediums were subjected to the same acceleration test and the same characteristic evaluation as in experimental example 1. The results of these test and evaluation are shown in Table 1, which are similar to those of comparative experimental examples 1 and 2.

[Experimental Examples 5 to 8]

Mediums having the layer structures shown in Table 1 (experimental examples 5 to 8) were manufactured and subjected to the same acceleration test and the same characteristic evaluation as in experimental example 1.

Each of the mediums of experimental examples 2 to 4 is satisfactory in terms of the results of the acceleration test and the characteristic evaluation.

In the above-described experimental examples, a magneto-optical recording material was used in the recording layer 13. However, the present invention can be applied to recording mediums using other recording materials.

Table 1

| | Layer structure Film thickness nm | Form of first dielectric layer 12 y'/x' ratio (Film thickness : nm) | | | Acceleration test 70 ℃, 90 %RH | | | | | Adjustment of characteristics | |
|---|---|---|---|---|---|---|---|---|---|---|---|
| | | | | | BER | | | Appearance | | Reflec-tivity | MO Ampli-tude |
| | | Sub-strate | ///// | Record-ing layer | 0 H | 500 H | 1000 H | 0 H | 1000H | | |
| Experi-mental example 1 | PC/SiN/TbFeCo/SiN 80   70 | $\frac{1.35}{(40)}$ | | $\frac{1.20}{(55)}$ | $2 \times 10^{-5}$ | $2.8 \times 10^{-5}$ | $3 \times 10^{-5}$ | Normal | Normal | ○ | ○ |
| 2 | PC/SiN/GdFeCo/TbFeCo/SiN 40   40   70 | $\frac{1.35}{(40)}$ | | $\frac{1.15}{(50)}$ | $1.5 \times 10^{-5}$ | $2.1 \times 10^{-5}$ | $2.5 \times 10^{-5}$ | // | // | ○ | ○ |
| 3 | PC/SiC/TbFeCo/SiC/Al 20   30   60 | $1.50$ | | $\frac{1.13}{(90)}$ | $2.5 \times 10^{-5}$ | $3 \times 10^{-5}$ | $3.7 \times 10^{-5}$ | // | // | ○ | ○ |
| 4 | Glass/2P/AlN/DyFeCo/AlN | $\frac{1.10}{(35)}$ | | $\frac{0.9}{(50)}$ | $2 \times 10^{-5}$ | $2.7 \times 10^{-5}$ | $3.1 \times 10^{-5}$ | // | // | ○ | ○ |
| Compara-tive experiment-al example 1 | PC/SiN/TbFeCo/SiN 80   70 | | $\frac{1.20}{(90)}$ | | $2 \times 10^{-5}$ | $5 \times 10^{-5}$ | $8 \times 10^{-5}$ | // | Film abnormality defect | ○ | ○ |
| 2 | PC/SiN/TbFeCo/SiN 80   70 | | $\frac{1.35}{(90)}$ | | $2.5 \times 10^{-5}$ | $3 \times 10^{-5}$ | $3.2 \times 10^{-5}$ | // | Normal | × | △ |
| 3 | PC/SiC/TbFeCo/SiC/Al 20   30   60 | | $\frac{1.13}{(90)}$ | | $3 \times 10^{-5}$ | $7 \times 10^{-5}$ | $9 \times 10^{-5}$ | // | Film abnormality defect | ○ | △ |
| 4 | PC/SiC/TbFeCo/SiC/Al 20   30   60 | | $\frac{1.50}{(90)}$ | | $3.3 \times 10^{-5}$ | $4.2 \times 10^{-5}$ | $4.5 \times 10^{-5}$ | // | Normal | △ | △ |

EP 0 637 017 A1

Continued from Table 1

| Layer structure Film thickness nm | Form of first dielectric layer 12 y'/x' ratio (Film thickness: nm) Substrate | Form of first dielectric layer 12 y'/x' ratio (Film thickness: nm) Recording layer | Acceleration test 70 °C, 90 % R H BER 0 H | BER 600 H | BER 1000 H | Appearance 0 H | Appearance 1000 H | Adjustment of characteristics Reflectivity | MD amplitude |
|---|---|---|---|---|---|---|---|---|---|
| Experimental example 5<br>PC/SiO/GdTbFeCo/SiO/Al<br>20 50 60 | $\frac{1.05}{(20)}$ | $\frac{0.90}{(85)}$ | $2.5 \times 10^{-5}$ | $3.1 \times 10^{-5}$ | $3.4 \times 10^{-5}$ | Normal | Normal | ○ | ○ |
| 6<br>G/2P/ZrO₂/DyFeCo/ZrO₂<br>80 100 | $\frac{2.10}{(30)}$ | $\frac{1.90}{(60)}$ | $2.7 \times 10^{-5}$ | $3.2 \times 10^{-5}$ | $3.5 \times 10^{-5}$ | 〃 | 〃 | ○ | ○ |
| 7<br>PC/SiN+AlN/TbFeCo/SiN<br>80 80 | $\frac{1.2}{(95)}$ | $1.00$ | $2.3 \times 10^{-6}$ | $3.0 \times 10^{-5}$ | $3.2 \times 10^{-6}$ | 〃 | 〃 | ○ | ○ |
| 8<br>PC/ZnS/GdFeCo/TbFeCo/ZnS | $\frac{1.05}{(15)}$ | $\frac{0.95}{(85)}$ | $2.2 \times 10^{-6}$ | $3.1 \times 10^{-5}$ | $3.5 \times 10^{-5}$ | 〃 | 〃 | ○ | ○ |

As described above, the optical recording medium of the present invention, having the above-described

8

structure, has improved adherence between the substrate and the film and improved long-time reliability, while suitable optical characteristics, such as reflectivity and other factors, and dynamic characteristics (C/N ratio and other factors) are maintained.

While the present invention has been described with respect to what presently are considered to be the preferred embodiments, it is to be understood that the invention is not limited to the disclosed embodiments. To the contrary, the present invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An optical recording medium comprising a transparent substrate, a first dielectric layer, a recording layer and a second dielectric layer, at least said first dielectric layer, said recording layer and said second dielectric layer being successively formed on the transparent substrate, wherein said first dielectric layer comprises a material satisfying the general formula:
$$Mx'Ry';$$
where M is a metallic or semimetallic element, R is a light element which is one of nitride, carbon, oxygen and sulfur, and x' and y' are each a chemical composition value of the corresponding element, and wherein the value of y'/x' varies so as to be maximized in the vicinity of said substrate in the direction of film thickness.

2. An optical recording medium according to claim 1, wherein the value of y'/x' of the material in the vicinity of said substrate satisfies the relation:
$$0.9y/x \leq y'/x' < 1.8y/x;$$
where x and y are stoichiometric composition values of a corresponding material represented by MxRy, where M is a metallic or semimetallic element, and R is a light element which is one of nitride, carbon, oxygen and sulfur.

3. An optical recording medium according to claim 1, wherein the value of y'/x' of the material varies so as to be continuously reduced in a direction from said transparent substrate toward said recording layer.

4. An optical recording medium according to claim 1, wherein the value of y'/x' of the material varies so as to be discontinuously reduced in the direction from said transparent substrate toward said recording layer.

5. An optical recording medium according to claim 1, wherein said first dielectric layer is formed of a composite material comprising at least one material selected from the group consisting of nitrides, carbides, oxides and sulfides.

6. An optical recording medium according to claim 1, wherein the metallic or semimetallic element constituting said first dielectric layer is at least one element selected from the group consisting of Si, Al, Zr, Ti and Zn.

7. An optical recording medium according to claim 1, wherein said first dielectric layer is composed of silicon nitride.

8. An optical recording medium comprising a transparent substrate, a first dielectric layer, a recording layer and a second dielectric layer, at least said first dielectric layer, said recording layer and said second dielectric layer being successively formed on the transparent substrate, wherein a refractive index of said first dielectric layer is minimized in the vicinity of said substrate in a direction of film thickness.

9. An optical recording medium according to claim 8, wherein the refractive index of said first dielectric layer is continuously varied in a direction from said transparent substrate toward said recording layer.

10. An optical recording medium according to claim 8, wherein the refractive index of said first dielectric layer is discontinuously varied in a direction from said transparent substrate toward said recording layer.

FIG. 1

# FIG. 2

FILM THICKNESS OF FIRST DIELECTRIC LAYER (nm)

Curve labels: 1.33, 1.28, 1.20

y'/x'

REFRACTIVE INDEX — SMALL (up) / LARGE (down)

EP 0 637 017 A1

# FIG. 3

LARGE

$y'/x'$

SMALL

SUBSTRATE     FIRST DIELECTRIC LAYER     RECORDING LAYER

# FIG. 4

LARGE

$y'/x'$

SMALL

SUBSTRATE     FIRST DIELECTRIC LAYER     RECORDING LAYER

# FIG. 5

55 — REFLECTING LAYER

54 — SECOND DIELECTRIC LAYER

53 — RECORDING LAYER

52 — FIRST DIELECTRIC LAYER

51 — SUBSTRATE

OPTIONAL PROTECTIVE COATING LAYER (ORGANIC MATERIAL)

# FIG. 6

## PRIOR ART

64

63

62

61

| | DOCUMENTS CONSIDERED TO BE RELEVANT | | EP 94305600.2 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| A | <u>EP - A - 0 509 467</u><br>(SHIN-ETSU CHEMICAL CO.LTD.)<br> * Abstract; claims 1,2 *<br>-- | 1,8 | G 11 B  7/00<br>G 11 B  7/24<br>G 11 B  7/26<br>G 11 B 11/10<br>G 11 B 13/04 |
| A | <u>EP - A - 0 427 982</u><br>(SHIN-ETSU CHEMICAL CO.LTD)<br> * Abstract; claims 1-14 *<br>-- | 1,8 | |
| A | <u>EP - A - 0 442 494</u><br>(MITSUBISHI PLASTICS INDUSTRIES LTD.)<br> * Fig. 1; abstract; claim 1 *<br>---- | 1,8 | |
| | | | **TECHNICAL FIELDS SEARCHED (Int. Cl. 6)**<br><br>G 11 B  7/00<br>G 11 B 11/00<br>G 11 B 13/00 |

The present search report has been drawn up for all claims

| Place of search<br>VIENNA | Date of completion of the search<br>03-11-1994 | Examiner<br>BERGER |
|---|---|---|